# EUROPÄISCHE PATENTSCHRIFT

(11) **EP 0 818 260 B1**
(45) Veröffentlichungstag und Bekanntmachung des Hinweises auf die Patenterteilung: **30.01.2002**
(21) Anmeldenummer: 97111396.4
(22) Anmeldetag: 05.07.1997
(51) Int. Cl.: B23B 27/14

(54) **Als Vieleck ausgebildete Schneidplatte**
Cutting insert of polygonal shape
Plaquette de coupe polygonale

(30) Priorität: 11.07.1996 DE 19627990
(43) Veröffentlichungstag der Anmeldung: 14.01.1998
(73) Patentinhaber: MAPAL Fabrik für Präzisionswerkzeuge Dr. Kress KG, D-73431 Aalen (DE)
(72) Erfinder: Kress, Dieter Dr., 73431 Aalen (DE); Häberle, Friedrich, 73466 Lauchheim (DE)
(74) Vertreter: Gleiss, Alf-Olav, Dipl.-Ing.

(56) Entgegenhaltungen:
- DE-A- 2 231 631
- DE-A- 3 333 100
- DE-C- 3 321 982
- US-A- 4 318 318

## Beschreibung

Die Erfindung betrifft eine als Vieleck ausgebildete Schneidplatte für die spanabtragende Bearbeitung von Bohrungsoberflächen von metallischen Werkstücken gemäß Oberbegriff des Anspruchs 1.

Schneidplatten der hier angesprochenen Art sind bekannt. Sie werden im Zusammenhang mit Werkzeugen verwendet, die gegenüber der zu bearbeitenden Bohrung eine Relativdrehung durchführen. Es ist also möglich, das zu bearbeitende Werkstück gegenüber einem feststehenden Werkzeug in Rotation zu versetzen oder aber das rotierende Werkzeug in die Bohrung eines feststehenden Werkstücks einzuführen. Bei der Bearbeitung der Bohrungsoberfläche werden von der Schneidplatte Späne abgetragen. Insbesondere bei der Feinbearbeitung von Bohrungsoberflächen ist der Spanabfluß entscheidend. Es ist wichtig, daß die Späne aus der bearbeiteten Bohrung abgeführt werden, ohne daß es zu einem Spanstau und somit zu einer Beeinträchtigung der erzielten Bohrungsoberfläche kommt. Sowohl zu lange spiralförmige Späne als auch zu kurze Späne führen dabei zu Beeinträchtigungen. Insbesondere bei Schneidplatten mit runden Schneidkanten, wie sie hier angesprochen sind, ist die Erzielung kurzer Späne außerordentlich problematisch.

Aus der US-PS 4,318,318 ist eine als Vieleck ausgebildete Schneidplatte zur spanabtragenden Bearbeitung von Bohrungsoberflächen metallischer Werkstücke bekannt, die eine um die ganze Schneidplatte umlaufende Flachnut besitzt.

Die US-PS 4,340,324 zeigt eine Schneidplatte, deren Schneidkanten über eine Fase in eine abfallende Fläche übergehen. Diese geht in eine weitere, ebenfalls in die gleiche Richtung abfallende Fläche über. Diese mit gleicher Winkelrichtung abfallenden Flächen bilden Spanleitflächen aus.

Es ist daher Aufgabe der Erfindung, eine Schneidplatte der eingangs genannten Art zu schaffen, die eine Spanableitung, eine Spanumleitung und eine Spanbrechung verbessert.

Diese Aufgabe wird bei einer Schneidplatte gemäß Oberbegriff des Anspruchs 1 mit Hilfe der in diesem Anspruch genannten Merkmale gelöst. Dadurch, daß die Vorderseite der Schneidplatte und die Seitenkante in einer gemeinsamen Ebene liegen, daß die Spanleitfläche ausgehend von den Eckbereichen und Seitenkanten abfällt und mit der gemeinsamen Ebene einen spitzen Winkel einschließt, daß die Spanleitkante parallel zu den geradlinigen Seitenkanten verlaufende geradlinige Abschnitte aufweist, die in gekrümmte Abschnitte übergehen, die im Bereich der abgerundeten Eckbereiche gleichsinnig gekrümmt ausgebildet sind, daß die Länge der gekrümmten Abschnitte der Spanleitkante größer ist als die Länge der zugehörigen abgerundeten Eckbereiche und daß die Spanleitkante und die Ebene einen Winkel einschließen, der größer als der Winkel ist, kann das Spanablauf- und -bruchverhalten optimal beeinflußt werden. Besonders dadurch, daß die Länge des gebogenen Spanleitkantenabschnitts größer ist als die Länge des abgerundeten Eckbereichs, so daß die Spanleitkante quasi in Richtung des abgerundeten Eckbereichs vorspringt und damit die Spanleitfläche quasi verkürzt wird. Durch den Vorsprung lassen sich relativ kurze Späne erreichen, so daß eine Beeinträchtigung der erzielten Bohrungsoberfläche praktisch auszuschließen ist.

Bevorzugt wird weiterhin ein Ausführungsbeispiel der Schneidplatte, das sich dadurch auszeichnet, daß die Krümmungsmittelpunkte des gebogenen Spanleitkantenabschnitts und des abgerundeten Eckbereichs auf einer gedachten Geraden liegen, die mit der Winkelhalbierenden des abgerundeten Eckbereichs zusammenfällt. Auf diese Weise ist es besonders einfach, das Spanablauf- und -bruchverhalten zu variieren und an Materialien des zu bearbeitenden Werkstücks anzupassen.

Weitere Ausgestaltungen ergeben sich aus den übrigen Unteransprüchen.

Die Erfindung wird im folgenden anhand der Zeichnungen näher erläutert. Es zeigen:
- Figur 1: eine Draufsicht auf ein erstes Ausführungsbeispiel einer Schneidplatte;
- Figur 2: einen stark vergrößerten Eckbereich der Schneidplatte gemäß Figur 1 in Draufsicht;
- Figur 3: einen Schnitt durch einen Eckbereich der Schneidplatte, wie er in Figur 2 dargestellt ist und
- Figur 4: den Eckbereich eines zweiten Ausführungsbeispiels einer Schneidplatte.

Die im folgenden beschriebene, als Vieleck ausgebildete Schneidplatte dient der spanabtragenden Bearbeitung von Bohrungsoberflächen, insbesondere der Feinbearbeitung, bei der ein optimaler Spanfluß besonders wichtig ist, weil zu lange Späne, die zu einem Spanstau führen können, die Oberfläche der Bohrung zerstören und weil zu kurze Späne zu einem Metallstaub innerhalb der bearbeiteten Bohrung führen können, der ebenfalls die erzielte Oberfläche beeinträchtigt.

Die Anzahl der Ecken der Schneidplatte ist letztlich nicht entscheidend. Es können also außer den im folgenden beschriebenen sechs- und viereckigen Schneidplatten auch beispielsweise achteckige Schneidplatten realisiert werden. Denkbar sind auch dreieckige Schneidplatten.

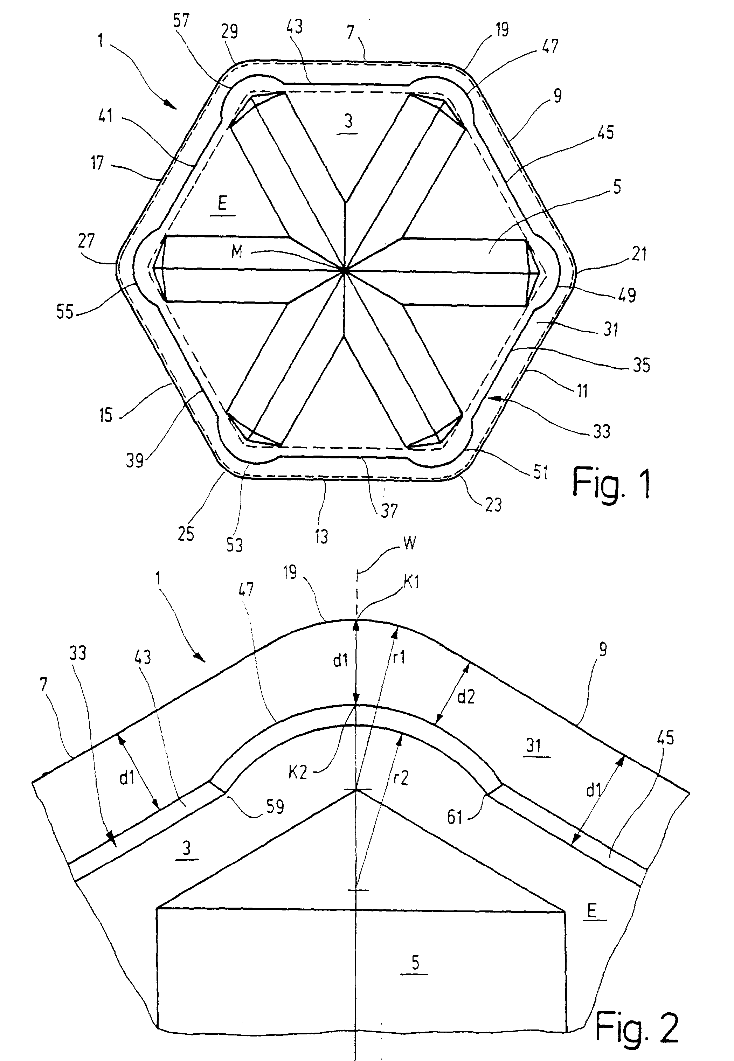

Figur 1 zeigt ein erstes Ausführungsbeispiel einer Schneidplatte 1 mit sechs Ecken in Draufsicht. Die Darstellung zeigt die auch als Messerbrust bezeichnete Vorderseite 3 der Schneidplatte 1. In die Vorderseite können Spannuten 5 eingebracht werden, in die Haltevorrichtungen, beispielsweise Spannpratzen eingreifen und die Schneidplatte 1 am Grundkörper eines geeigneten Werkzeugs sicher verankern. Die Spannuten 5 sind hier sternförmig ausgebildet und verlaufen jeweils in Richtung zur gegenüberliegenden Ecke der sechseckigen Schneidplatte.

Die Schneidplatte 1 weist sechs geradlinige Seitenkanten 7, 9, 11, 13, 15 und 17 auf, die tangential in abgerundete Eckbereiche 19, 21, 23, 25, 27 und 29 übergehen. Die Eckbereiche sind vorzugsweise kreisbogenförmig gekrümmt. Die Seitenkanten und Eckbereiche liegen alle in einer gemeinsamen Ebene E, die mit der Ebene zusammenfallen, in der auch die Vorderseite 3 der Schneidplatte 1 liegt. An die Seitenkanten 7 bis 17 und Eckbereiche 19 bis 29 schließt sich nach innen, also in Richtung zum gedachten Mittelpunkt M der Schneidplatte 1 gesehen, eine umlaufende Spanleitfläche 31 an. Diese wird nach innen von einer durchgehenden Spanleitkante 33 begrenzt, die geradlinige Abschnitte 35, 37, 39, 41, 43 und 45 sowie gekrümmte Abschnitte 47, 49, 51, 53, 55 und 57 umfaßt.

Aus der Draufsicht in Figur 1 ist ersichtlich, daß die Breite der Spanleitfläche 31 beziehungsweise der Abstand der äußeren Begrenzungskanten der Schneidplatte 1 und der Spanleitkante 33 im Bereich der Seitenkanten und der geradlinigen Abschnitte der Spanleitkante 33 größer ist als im Bereich der gekrümmten Eckbereiche und der gekrümmten Abschnitte der Spanleitkante 33. Die gekrümmten Abschnitte der Spanleitkante 33 springen quasi in Richtung der abgerundeten Eckbereiche vor, das heißt, die geradlinigen Abschnitte der Spanleitkante 33 gehen nicht tangential in die gekrümmten Abschnitte der Spanleitkante über.

Figur 2 zeigt stark vergrößert einen Eckbereich der Schneidplatte 1, beispielhaft den abgerundeten Eckbereich 19, an den sich die geradlinigen Seitenkanten 7 und 9 tangential anschließen.

In einem Abstand zum gekrümmten Eckbereich 19 verläuft der gekrümmte Abschnitt 47 der Spanleitkante 33. Es ist hier, wie auch in Figur 1, deutlich erkennbar, daß die beiden Bereiche gleichsinnig gekrümmt sind und sich vom Mittelpunkt M der Schneidplatte 1 nach außen wölben.

Die Spanleitkante 33 fällt, ausgehend von der Vorderseite 3, nicht senkrecht zur Spanleitfläche 31 ab. Dies wird hier dadurch dargestellt, daß hier parallele Linien die Spanleitkante 33 darstellen.

Das hier dargestellte Ausführungsbeispiel zeichnet sich dadurch aus, daß der Krümmungsradius r1 des abgerundeten Eckbereichs 19 gleich groß ist wie der Krümmungsradius r2 des gekrümmten Abschnitts 47. Besonders die vergrößerte Darstellung gemäß Figur 2 läßt erkennen, daß die Länge des abgerundeten Eckbereichs 19 deutlich kleiner ist als die Länge des gekrümmten Abschnitts 47. Deutlich wird auch, daß zwar der abgerundete Eckbereich 19 tangential in die angrenzenden geradlinigen Seitenkanten 7 und 9 übergeht, daß aber beim Übergang zwischen den geradlinigen Abschnitten 43 und 45 der Spanleitkante 33 zum gekrümmten Abschnitt 47 jeweils ein Absatz 59 und 61 gegeben ist, der dadurch gebildet ist, daß sich der gekrümmte Abschnitt 47 gegenüber den geradlinigen Abschnitten 43 und 45 nach außen hin zum abgerundeten Eckbereich 19 hin wölbt. Dadurch ergibt sich eine unterschiedliche Breite der Spanleitfläche 31. Zwischen den geradlinigen Seitenkanten 7 und 9 und den parallel dazu verlaufenden geradlinigen Abschnitten 43 und 45 ist ein Abstand d1 gegeben, der sich im Bereich zwischen den geradlinigen Seitenkanten 7 und 9 und dem gekrümmten Abschnitt 47 auf die Strecke d2 verkleinert. Im Bereich der Krümmungsmittelpunkte K1 des abgerundeten Eckbereichs 19 und K2 des gekrümmten Abschnitts 47, die auf einer gedachten Geraden liegen, die mit der Winkelhalbierenden W des abgerundeten Eckbereichs 19 zusammenfällt, ist der Abstand zwischen dem Eckbereich 19 und dem zugehörigen gekrümmten Abschnitt 47 wiederum gleich groß wie im Bereich der geradlinigen Seitenkanten und der zugehörigen geradlinigen Abschnitte. Er beträgt hier also wiederum dl. Bei dem hier dargestellten Ausführungsbeispiel ist entscheidend, daß die als Spanbrecher dienende Spanleitkante 33 beziehungsweise der gekrümmte Abschnitt 47 den identischen Krümmungsradius r2 aufweist, wie er im zugeordneten, abgerundeten Eckbereich 19 gegeben ist. Die Spanleitkante 33 bildet also in den Eckbereichen vorgewölbte/gebogene Spanbrechervorsprünge aus, in deren Bereich die Breite der Spanleitfläche 31 nicht konstant ist. Sie vermindert sich ausgehend vom Krümmungsmittelpunkt K2 bis zu den Absätzen 59 und 61 des gekrümmten Abschnitts 47.

Bei dem Ausführungsbeispiel gemaß den Figuren 1 und 2 liegen die Krümmungsmittelpunkte auf der Winkelhalbierenden W. Es ist jedoch auch möglich, die Krümmungsmittepunkte gegenüber der Winkelhalbierenden versetzt anzuordnen. Wird der Krümmungsmittelpunkt K2 beispielsweise in Figur 2 nach links verschoben, läuft der bei der Bearbeitung einer Bohrungswand entstehende Span nach vorne in Richtung der Vorschubrichtung des Werkzeugs ab. Bei einer Verlagerung nach rechts, läuft der Span nach in entgegengesetzter Richtung hinten weg. Es zeigt sich also, daß durch den Verlauf der Spanleitkante nicht nur das Spanbruchverhalten beeinflußt werden kann, sondern auch das Spanablaufverhalten.

Die anhand des abgerundeten Eckbereichs 19 erläuterten Gegebenheiten sind an allen Ecken der Schneidplatte 1 identisch, so daß diese als Wendeplatte eingesetzt werden kann.

Denkbar ist es allerdings auch, verschieden ausgestaltete Eckbereiche an einer einzigen Wendeplatte vorzusehen, um diese gegebenenfalls im Zusammenhang mit verschiedenen Werkstoffen einsetzen zu können. Entscheidend bleibt auf jeden Fall, daß die Spanleitkante 33 in den Eckbereichen Vorsprünge aufweist, die durch die gekrümmten Abschnitte 47 bis 57 gebildet werden, in deren Bereich die Spanleitfläche 31 sich verjungt.

Den Darstellungen gemäß den Figuren 1 und 2 ist zu entnehmen, daß die Ausgestaltung der Schneidplatte 1 bezüglich der Winkelhalbierenden W symmetrisch ist.

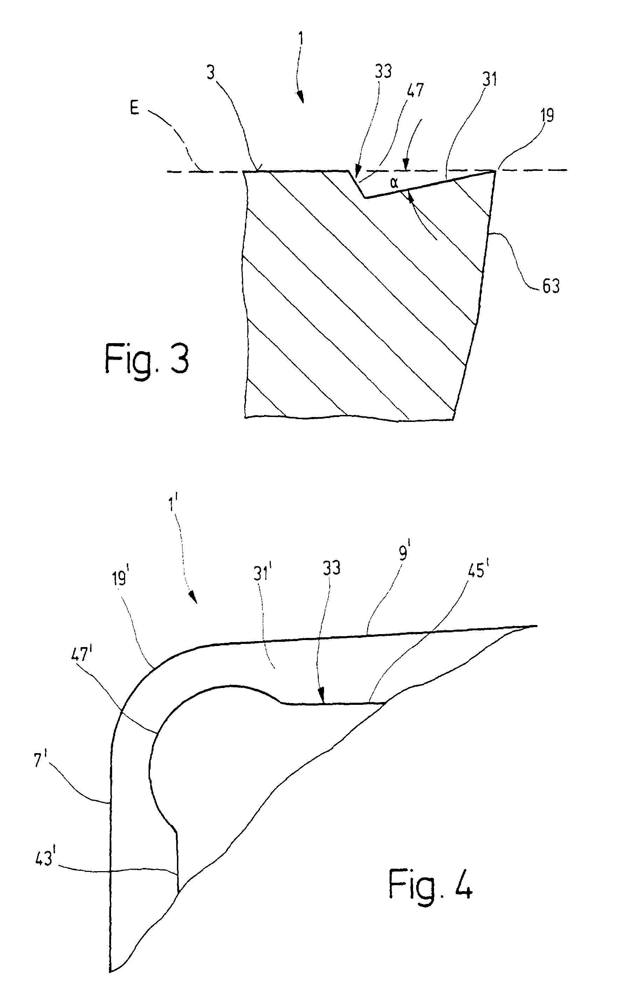

Figur 3 zeigt einen Schnitt durch den Eckbereich 19 der Schneidplatte 1. Der entlang der Winkelhalbierenden W geführte Schnitt durch die Schneidplatte 1 läßt noch einmal deutlich erkennen, daß die durch die Seitenkanten und Eckbereiche gebildete Umfangslinie der Schneidplatte 1 und damit auch die Haupt- und Nebenschneiden in der gemeinsamen Ebene E liegen, in der auch die Vorderseite 3 der Schneidplatte 1 angeordnet ist. Von den Schneidkanten beziehungsweise von dem abgerundeten Eckbereich 19 aus fällt die Spanleitfläche 31 gegenüber der Ebene E in Richtung zum Mittelpunkt M der Schneidplatte 1 unter einem spitzen Winkel α ab, der im Bereich von 8° bis 18°, vorzugsweise von 11° bis 13° liegt und insbesondere circa 12° beträgt. Die Spanleitfläche 31 wird nach innen von der hier schräg abfallenden Spanleitkante 33 beziehungsweise hier von dem gekrümmten Abschnitt 47 begrenzt. Die Spanleitkante 33 schließt mit der Spanleitflache 31 hier einen stumpfen Winkel ein. Sie fällt also gegenüber der Ebene E in Richtung zur Spanleitfläche 31 ab. Von den Seitenkanten beziehungsweise Eckbereichen der Schneidplatte 1, die die Haupt- und Nebenschneiden der Schneidplatte bilden, verlaufen die bei der Bearbeitung einer Bohrungsoberfläche entstehenden Späne auf der Spanleitfläche 31 ab und stoßen gegen die Spanleitkante 33. Dort werden die Späne umgelenkt und gebrochen. Durch die gekrümmten Abschnitte der Spanleitkante 33 ergibt sich ein besonders günstiges Bruchverhalten der Späne, so daß lange Spiralen und kurze Spanbruchstücke vermieden werden können und sich eine optimale Oberflächenqualität der bearbeiteten Bohrungen einstellt.

Aus Figur 3 wird deutlich, daß die Schneiden der Schneidplatte 1 beziehungsweise die Seitenkanten und die Eckbereiche durch die Schnittlinie der Spanleitfläche 31 mit der umlaufenden Freifläche 63 gebildet werden. Die Freifläche 63 verläuft, wie bei bekannten Schneidplatten, gegenüber der Ebene E unter einem Winkel, der etwas kleiner ist als 90°, so daß sich ein sogenannter Freiwinkel ergibt.

Figur 4 zeigt ein weiteres Ausführungsbeispiel einer Schneidplatte 1' und zwar lediglich einen abgerundeten Eckbereich 19', der durch zwei hier unter einem Winkel von 90° zueinander verlaufenden Seitenkanten 7' und 9' gebildet wird, die tangential in den Eckbereich 19' übergehen. In einem Abstand zu den Seitenkanten und zu dem Eckbereich verläuft auch hier wiederum eine Spanleitkante 33, die zwei parallel zu den Seitenkanten verlaufende geradlinige Abschnitte 43' und 45' umfaßt und einen dazwischenliegenden gekrümmten Abschnitt 47' aufweist. Charakteristisch ist, daß auch hier, wie anhand der Figuren 1 und 2 erläutert, der gekrümmte Abschnitt 47' quasi einen Vorsprung bildet, der zum abgerundeten Eckbereich 19' vorragt, so daß sich dort schmalere Bereiche der Spanleitfläche 31' ergeben, wie dies anhand der Figur 2 erläutert wurde.

Gemäß Figur 4 sind der abgerundete Eckbereich 19' und der gekrümmte Abschnitt 47' wiederum gleichsinnig gekrümmt und folgen vorzugsweise einer Kreisbogenlinie. Besonders bewährt hat sich eine derartige Ausgestaltung, bei der der Krümmungsradius des Eckbereichs und der des gekrümmten Abschnitts gleich groß sind. Es ist jedoch auch denkbar, beispielsweise bei einer achteckigen Ausgestaltung der Schneidplatte, verschiedene Krümmungsradien vorzusehen. Entscheidend bleibt, daß die Spanleitkante im Bereich des Eckbereichs der Schneidplatte einen gewölbten Vorsprung ausbildet. Mit gewölbt soll hier ausgesagt werden, daß der gekrümmte Abschnitt der Spanleitkante gegenüber dem Eckbereich so verläuft, daß sich zumindest bereichsweise schmalere Spanleitflächenbereiche ergeben. Dasselbe gilt auch für eine Ausgestaltung einer Schneidplatte, die lediglich drei abgerundete Eckbereiche aufweist.

Die Krümmungsradien der Eckbereiche und der zugehörigen gekrümmten Abschnitte sind also aufeinander abgestimmt. Es ist denkbar, die Krümmungsradien im Bereich von 0,2 mm bis 0,6 mm, vorzugsweise von 0,3 mm bis 0,5 mm zu wählen. Besonders bewährt haben sich beispielsweise Krümmungsradien von 0,4 mm.

Bei einer anderen Ausgestaltung der Schneidplatte haben sich Krümmungsradien von vorzugsweise 0,6 mm bis 1,2 mm, insbesondere von 0,7 mm bis 0,9 mm bewährt. Besonders bevorzugt wird eine Ausgestaltung mit Krümmungsradien von 0,8 mm und einem Abstand d1 (siehe Figur 2) von 0,5 mm. Es ist jedoch möglich, den Abstand d1 im Bereich von 0,3 mm bis 0,7 mm, vorzugsweise von 0,4 mm bis 0,6 mm zu wahlen.

Durch eine Variation der Krümmungsradien der Eckbereiche und der gekrümmten Abschnitte kann der Vorsprung der Spanleitkanten 33 im Bereich der abgerundeten Eckbereiche mehr oder weniger stark ausgeprägt werden. Durch die sich in diesem Bereich vorwölbende Spanleitkante kann das Spanablauf- und -bruchverhalten so beeinflußt werden, daß sich ein optimaler Spanfluß ergibt. Somit bleiben die erzielten Oberflächen der Bohrungen unversehrt.

## Patentansprüche

1. Als Vieleck ausgebildete Schneidplatte für die spanabtragende Bearbeitung von Bohrungsoberflächen von metallischen Werkstücken, mit geradlinigen, in einer gemeinsamen Ebene liegenden Seitenkanten, die tangential in abgerundete Eckbereiche übergehen, wobei Bereiche der Eckbereiche und der Seitenkanten als Haupt- und Nebenschneide dienen, mit in einem Abstand zu den Seitenkanten angeordneten, als Spanbrecher dienenden Spanleitkanten, die von den Schneiden ausgehende Spanflächen begrenzen, **dadurch gekennzeichnet, daß** die Vorderseite (3) der Schneidplatte (1) und die Seitenkante (7, 9, 11, 13, 15 und 17) in einer gemeinsamen Ebene (E) liegen, daß die Spanleitfläche (31) ausgehend von den Eckbereichen (19, 21, 23, 25, 27 und 29) und Seitenkanten (7, 9, 11, 13, 15 und 17) abfällt und mit der gemeinsamen Ebene (E) einen spitzen Winkel (α) einschließt, daß die Spanleitkante (33) parallel zu den geradlinigen Seitenkanten (7, 9, 11, 13, 15 und 17) verlaufende geradlinige Abschnitte (35, 37, 39, 41, 43 und 45) aufweist, die in gekrümmte Abschnitte (47, 49 ,51, 53, 55 und 57) übergehen, die im Bereich der abgerundeten Eckbereiche (19, 21, 23, 25, 27 und 29) gleichsinnig gekrümmt ausgebildet sind, daß die Länge der gekrümmten Abschnitte (47, 49, 51, 53, 55 und 57) der Spanleitkante (33) größer ist als die Länge der zugehörigen abgerundeten Eckbereiche (19, 21, 23, 25, 27 und 29) und daß die Spanleitkante (33) und die Ebene (E) einen Winkel einschließen, der größer als der Winkel (α) ist.

2. Schneidplatte nach Anspruch 1, **dadurch gekennzeichnet, daß** die gekrümmten Abschnitte (47, 49, 51, 53, 55 und 57) der Spanleitkante (33) wenigstens abschnittsweise kreisbogenförmig ausgebildet sind und den gleichen Krümmungsradis wie der zugehörige abgerundete kreisbogenförmig ausgebildete Eckbereich aufweisen.

3. Schneidplatte nach Anspruch 1 oder 2, **dadurch gekennzeichnet, daß** der Abstand zwischen Seitenkanten und Spanleitkanten nur am Anfang und in der Mitte der gekrümmten Abschnitte (47, 49, 51, 53, 55 und 57) gleich groß ist wie der Abstand zwischen den geradlinigen Seitenkanten (7, 9, 11, 13, 15 und 17) und den parallel dazu verlaufenden geradlinigen Abschnitten (35, 37, 39, 41, 43 und 45) der Spanleitkante (33).

4. Schneidplatte nach einem der vorhergehenden Ansprüche, **dadurch gekennzeichnet, daß** der Krümmungsmittelpunkt (K1) der abgerundeten Eckbereiche und der Krümmungsmittelpunkt (K2) der zugehörigen gekrümmten Abschnitte der Spanleitkanten auf einer gedachten Geraden liegen, die mit der Winkelhalbierenden (W) der abgerundeten Eckbereiche zusammenfällt.

5. Schneidplatte nach einem der vorhergehenden Ansprüche, **dadurch gekennzeichnet, daß** der spitze Winkel (α) im Bereich von 8° bis 18°, vorzugsweise von 11° bis 13° liegt und insbesondere circa 12° beträgt.

6. Schneidplatte nach einem der vorhergehenden. Ansprüche, **dadurch gekennzeichnet, daß** der Radius (r1) der abgerundeten Eckbereiche (19, 21, 23, 25, 27 und 29) und der Radius (r2) der gekrümmten Abschnitte (47, 49, 51, 53, 55 und 57) der Spanleitkante (33) 0,2 mm bis 0,6 mm, vorzugsweise 0,3 mm bis 0,5 mm und insbesondere circa 0,4 mm beträgt.

7. Schneidplatte nach einem der Ansprüche 1 bis 5, **dadurch gekennzeichnet, daß** der Radius (r1) der abgerundeten Eckbereiche und der gekrümmten Abschnitte der Spanleitkante 0,6 mm bis 1,2 mm, vorzugsweise 0,7 mm bis 0,9 mm und insbesondere 0,8 mm beträgt.

8. Schneidplatte nach einem der vorhergehenden Ansprüche, **dadurch gekennzeichnet, daß** der Abstand (d1) zwischen den Seitenkanten und der Spanleitkante 0,3 mm bis 0,7 mm, vorzugsweise 0,4 mm bis 0,6 mm und insbesondere circa 0,5 mm beträgt.

9. Schneidplatte nach einem der vorhergehenden Ansprüche, **dadurch gekennzeichnet, daß** die Schneidplatte sechseckig ausgebildet ist.

10. Schneidplatte nach einem der vorhergehenden Ansprüche 1 bis 8, **dadurch gekennzeichnet, daß** die Schneidplatte viereckig ausgebildet ist.

## Claims

1. Cutting insert of a polygonal configuration for the chip-removing machining of boring surfaces of metallic workpieces, having linear lateral edges which lie in a common plane and change tangentially into rounded corner regions, regions of the corner regions and of the lateral edges serving as major and minor cutting edges, having chip conducting edges, which are disposed at a spacing from the lateral edges and serve as chip breakers, said chip conducting edges delimiting the chip faces which start at the cutting edges, c**haracterised in that** the front side (3) of the cutting insert (1) and the lateral edge (7, 9, 11, 13, 15 and 17) lie in a common plane (E), in that the chip conducting face (31) falls away starting from the comer regions (19, 21, 23, 25, 27 and 29) and the lateral edges (7, 9, 11, 13, 15 and 17) and forms an acute angle (a) to the common plane (E), in that the chip conducting edge (33) has linear portions (35, 37, 39, 41, 43 and 45) which extend parallel to the linear lateral edges (7, 9, 11, 13, 15 and 17), said linear portions changing into curved portions (47, 49, 51, 53, 55 and 57) which are configured curved in the same direction in the region of the rounded corner regions (19, 21, 23, 25, 27 and 29), in that the length of the curved portions (47, 49, 51, 53, 55 and 57) of the chip conducting edge (33) is greater than the length of the associated rounded corner regions (19, 21, 23, 25, 27 and 29), and in that the chip conducting edge (33) and the plane (E) form an angle which is greater than the angle (α).

2. Cutting insert according to claim 1, **characterised in that** the curved portions (47, 49, 51, 53, 55 and 57) of the chip conducting edge (33) have a circular arc configuration, at least in portions, and have the same radius of curvature as the associated rounded corner region of a circular arc configuration.

3. Cutting insert according to claim 1 or 2, **characterised in that** the spacing between the lateral edges and the chip conducting edges is only of the same size at the beginning and in the centre of the curved portions (47, 49, 51, 53, 55 and 57) as the spacing between the linear lateral edges (7, 9, 11, 13, 15 and 17) and the linear portions (35, 37, 39, 41, 43 and 45) of the chip conducting edge (33) which extend parallel to said lateral edges.

4. Cutting insert according to one of the preceding claims, **characterised in that** the centre of curvature (K1) of the rounded corner regions and the centre of curvature (K2) of the associated curved portions of the chip conducting edges lie on an imaginary straight line which coincides with the angle bisection (W) of the rounded corner regions.

5. Cutting insert according to one of the preceding claims, **characterised in that** the acute angle (α) is in the range of 8° to 18°, preferably from 11° to 13° and especially approximately 12°.

6. Cutting insert according to one of the preceding claims, **characterised in that** the radius (r1) of the rounded corner regions (19, 21, 23, 25, 27 and 29) and the radius (r2) of the curved portions (47, 49, 51, 53, 55 and 57) of the chip conducting edge (33) are 0.2 to 0.6 mm, preferably 0.3 mm to 0.5 mm and especially approximately 0.4 mm.

7. Cutting insert according to one of the claims 1 to 5, **characterised in that** the radius (r1) of the rounded corner regions and of the curved portions of the chip conducting edge is 0.6 mm to 1.2 mm, preferably 0.7 mm to 0.9 mm and especially 0.8 mm.

8. Cutting insert according to one of the preceding claims, **characterised in that** the spacing (d1) between the lateral edges and the chip conducting edge is 0.3 mm to 0.7 mm, preferably 0.4 mm to 0.6 mm and especially approximately 0.5 mm.

9. Cutting insert according to one of the preceding claims, **characterised in that** the cutting insert has a hexagonal configuration.

10. Cutting insert according to one of the preceding claims 1 to 8, **characterised in that** the cutting insert has a rectangular configuration.

## Revendications

1. Plaquette de coupe de forme polygonale pour l'usinage avec enlèvement de copeaux de la surface de perçages de pièce métallique ayant des arêtes latérales rectilignes, situées dans un plan commun, qui rejoignent tangentiellement des zones de coin arrondies,
les zones de coin et celles des arêtes latérales servant d'arêtes de coupe principales et d'arêtes auxiliaires,
et ayant des arêtes guide-copeaux, prévues à une certaine distance des arêtes latérales et servant de brise-copeaux, ces arêtes guide-copeaux limitant les surfaces des copeaux partant des arêtes de coupe,
**caractérisée en ce que**
la face avant (3) de la plaquette de coupe (1) et les arêtes latérales (7, 9, 11, 13, 15, 17) sont situées dans un plan commun (E),
la surface guide-copeaux (31), descend en partant des zones de coin (19, 21, 23, 25, 27, 29) et des arêtes latérales (7, 9, 11, 13, 15, 17), et se termine dans le plan commun (E) suivant un angle aigu (α),
l'arête guide-copeaux (33) comporte, parallèlement aux arêtes latérales rectilignes (7, 9, 11, 13, 15, 17), des segments rectilignes (35, 37, 39, 41, 43, 45) qui rejoignent des segments courbes (47, 49, 51, 53, 55, 57) courbés dans le même sens au niveau des zones de coin arrondi (19, 21, 23, 25, 27, 29),
la longueur des segments courbes (47, 49, 51, 53, 55, 57) de l'arête guide-copeaux (33) est supérieure à la longueur des zones de coin arrondies, correspondantes (19, 21, 23, 25, 27, 29) et
l'arête guide-copeaux (33) et le plan (E) font un angle supérieur à l'angle (α).

2. Plaquette de coupe selon la revendication 1,
**caractérisée en ce que**
les segments arrondis (47, 49, 51, 53, 55, 57) de l'arête guide-copeaux (33) sont en arc de cercle au moins par segment et ont le même rayon que la zone de coin arrondie en arc de cercle correspondante.

3. Plaquette de coupe selon l'une quelconque des revendications 1 ou 2,
**caractérisée en ce que**
la distance entre les arêtes latérales et les arêtes guide-copeaux n'est la même qu'au début et au milieu des segments courbes (47, 49, 51, 53, 55, 57) que la distance entre les arêtes latérales rectilignes (7, 9, 11, 13, 15, 17) et les segments rectilignes parallèles (35, 37, 39, 41, 43, 45) de l'arête guide-copeaux (33).

4. Plaquette de coupe selon l'une quelconque des revendications précédentes,
**caractérisée en ce que**
le centre de courbure (K1) des zones de coin arrondies et le centre de courbure (K2) du segment courbe correspondant des arêtes guide-copeaux se situent sur une droite fictive qui coïncide avec la bissectrice (W) de l'angle des zones de coin arrondies.

5. Plaquette de coupe selon l'une quelconque des revendications précédentes,
**caractérisée en ce que**
l'angle aigu (α) se situe dans une plage comprise entre 8° et 18° et de préférence entre 11° et 13° et il est notamment environ égal à 12°.

6. Plaquette de coupe selon l'une quelconque des revendications précédentes,
**caractérisée en ce que**
le rayon (r1) des zones de coin courbes (19, 21, 23, 25, 27, 29) et le rayon (r2) des segments courbes (47, 49, 51, 53, 55, 57) de l'arête guide-copeaux (33) est compris entre 0,2 mm et 0,6 mm et de préférence entre 0,3 mm et 0,5 mm et notamment égal à environ 0,4 mm.

7. Plaquette de coupe selon l'une quelconque des revendications 1 à 5, **caractérisée en ce que**
le rayon (r1) des zones de coin arrondies et des segments courbes de l'arête guide-copeaux est de l'ordre de 0,6 mm à 1,2 mm et de préférence entre 0,7 mm et 0,9 mm et notamment égal à 0,8 mm.

8. Plaquette de coupe selon l'une quelconque des revendications précédentes,
**caractérisée en ce que**
la distance (d1) entre les arêtes latérales et l'arête guide-copeaux est de l'ordre de 0,3 mm à 0,7 mm et de préférence comprise entre 0,4 mm et 0,6 mm et elle est notamment égale à environ 0,5 mm.

9. Plaquette de coupe selon l'une quelconque des revendications précédentes,
**caractérisée en ce que**
la plaquette a une forme hexagonale.

10. Plaquette de coupe selon l'une quelconque des revendications 1 à 8,
**caractérisée en ce que**
la plaquette est carrée.
